# EUROPÄISCHE PATENTSCHRIFT

(11) **EP 3 990 810 B1**
(45) Veröffentlichungstag und Bekanntmachung des Hinweises auf die Patenterteilung: **19.06.2024**
(21) Anmeldenummer: 19733777.7
(22) Anmeldetag: 26.06.2019
(51) Int. Cl.: F01P 7/16, F01P 11/06, F16K 1/36, F16K 31/06, F16K 39/02, F01P 7/14

(54) **KÜHLMITTELVENTIL FÜR EIN KRAFTFAHRZEUG**
COOLANT VALVE FOR A MOTOR VEHICLE
SOUPAPE DE LIQUIDE DE REFROIDISSEMENT CONÇUE POUR UN VÉHICULE AUTOMOBILE

(43) Veröffentlichungstag der Anmeldung: 04.05.2022
(73) Patentinhaber: Pierburg GmbH, 41460 Neuss (DE)
(72) Erfinder: SADIKU, Besart, 41460 Neuss (DE); HERMANN, Max, 41460 Neuss (DE); SCHUMACHER, Julian, 41460 Neuss (DE); AYDAN, Sami, 41460 Neuss (DE); NIEBORG, Dominik, 41460 Neuss (DE)
(74) Vertreter: terpatent Patentanwälte und European Patent Attorneys ter Smitten Eberlein -Van Hoof
(86) Internationale Anmeldenummer: PCT/EP2019/067027
(87) Internationale Veröffentlichungsnummer: WO 2020/259824

(56) Entgegenhaltungen:
- EP-A1- 2 574 832
- WO-A1-2007/048828
- DE-A1- 10 248 125
- DE-A1-102015 101 477
- DE-A1-102016 118 341
- US-A1- 2007 051 105
- US-A1- 2010 206 388

## Beschreibung

Die Erfindung betrifft ein Kühlmittelventil für ein Kraftfahrzeug mit einem Gehäuse, das einen Einlass und einen Auslass aufweist, einem Durchströmungsquerschnitt, der zwischen dem Einlass und dem Auslass ausgebildet ist und von einem Ventilsitz umgeben ist, einem Regelkörper, der auf den Ventilsitz absetzbar und vom Ventilsitz abhebbar ist, Durchgangsöffnungen im Regelkörper, über die der Einlass stetig mit einem Raum an der dem Einlass abgewandten Seite des Regelkörpers verbunden ist, einem elektromagnetischen Aktor mit einem Anker, der mit dem Regelkörper gekoppelt und bewegbar ist.

Es sind insbesondere bei Anwendungen im gasführenden Bereich druckausgeglichene Ventile bekannt, bei denen durch den Druckausgleich insbesondere die Schaltzeiten deutlich verringert werden können. Zu nennen sind hier beispielsweise Schubumluftventile für Turbolader in Kraftfahrzeugen. Ein solches Schubumluftventil wird beispielsweise in der DE 10 2012 010 140 A1 beschrieben. Hierbei dienen im geschlossenen Zustand des Ventils die Durchgangsbohrungen im Regelkörper dem Druckausgleich zwischen der dem Ventilsitz zugewandten und der dem Ventilsitz abgewandten Seite des Regelkörpers. Auf diese Weise wird ein ungewolltes Öffnen des Ventils im Falle eines erhöhten Totaldrucks im Einlassstutzen der Ventilvorrichtung verhindert und eine Unempfindlichkeit bei Pulsationen erreicht.

Kühlmittelabsperrventile mit einem derartigen Druckausgleich sind bislang nicht bekannt. Ein Grund hierfür ist auch, dass ein mit Verunreinigungen wie beispielsweise Partikeln beladener Medienstrom, wie ein Kühlmittelstrom bei derartigen Ventilen durch die Bohrungen des Regelkörpers in den Raum hinter den Bohrungen gelangen kann, wo sich die Verunreinigungen ablagern können. Schreitet ein solcher Prozess voran, können sowohl die Bohrungen verstopfen und die Druckausgleichsfunktion des Regelkörpers versagen als auch eine Schwergängigkeit des Ventils folgen, wenn sich Partikel im Gleitbereich zwischen der Führungshülse und den beweglichen Ventilteilen absetzen oder der Raum zu stark mit Partikeln gefüllt wird.

So wird in der DE 10 2016 112 409 A1 ein axial durchströmbares Kühlmittelventil vorgeschlagen, bei dem aufgrund der Partikelbelastung des Kühlmittelstroms am Auslassstutzen eine Axialnut ausgebildet ist, die zum Gehäuse offen ausgebildet ist, um eine Schmutztasche zu bilden, in der sich die Schmutzstoffe aus dem Kühlmittel sammeln können. Durch eine derartig angeordnete Axialnut kann jedoch eine Fehlfunktion der Druckausgleichsbohrungen nicht verhindert werden.

Aus der DE 10 2016 118 341 A1 ist ein Schubumluftventil bekannt, welches am Regelkörper eine kreisförmige Vertiefung aufweist, die zum Aktor offen ausgebildet ist und nach unten durch einen Boden begrenzt wird.

Zusätzlich offenbart die WO 2007/048828 A1 ein Schubumluftventil mit einer mittleren hohl ausgeführten kardanischen Aufhängung, deren Hohlkörper über seitliche Öffnungen mit dem übrigen durch den Regelkörpers begrenzten Raum verbunden ist.

Bei den bekannten Ausführungen besteht entsprechend der Nachteil, dass ein Absetzen von Verunreinigungen in den Durchgangsbohrungen oder im Raum hinter dem Regelkörper nicht zuverlässig reduziert werden kann. Hierdurch ist die Druckausgleichsfunktion und korrekte Funktionsfähigkeit des Regelkörpers gefährdet.

Es stellt sich daher die Aufgabe, ein robustes und kostengünstiges Kühlmittelventil zu schaffen, dessen Funktionsfähigkeit, insbesondere die Druckausgleichsfunktion und Beweglichkeit des Regelkörpers zuverlässig aufrechterhalten wird.

Diese Aufgabe wird durch eine Ventilvorrichtung mit den Merkmalen des Hauptanspruchs 1 gelöst.

Dadurch, dass im Regelkörper zumindest eine Schmutztasche ausgebildet ist, die einen zum Einlass weisenden geschlossenen Boden aufweist und zu dem Raum, der an der dem Einlass abgewandten Seite des Regelkörpers ausgebildet ist, offen ist, wird den Schmutzpartikeln im Kühlmittelstrom ein Ort zum Absetzen zur Verfügung gestellt, in dem Schmutzpartikel gesammelt werden. Der Raum ist somit zwischen dem Aktor und dem durchströmten Gehäuse beziehungsweise im Aktor ausgebildet. In diesem Zusammenhang erzeugt der Boden eine räumlich geschlossene Ausführung der Schmutztasche zum Einlass, während fluidisch eine Verbindung zum Einlass über die Durchgangsöffnungen besteht. Vorzugsweise erstreckt sich die Schmutztasche axial im Regelkörper und weist eine axiale Länge auf, die größer ist als der maximale Hub des Ankers. Somit werden sich die Partikel auch bei Bewegung des Regelkörpers nicht aufgrund ihrer Trägheit schwebend aus den Schmutztaschen entfernen, da die axiale Ausdehnung der Schmutztasche größer ist als der Hub.

Vorzugsweise ist die Schmutztasche an einer bezüglich des Erdmittelpunktes oberen Seite des Regelkörpers offen und an einer bezüglich des Erdmittelpunktes unteren Seite des Regelkörpers durch den Boden geschlossen ausgebildet. Die Partikel werden somit der Schwerkraft folgend aus dem Raum in die Schmutztasche sinken. Hierzu ist der Raum geodätisch oberhalb des Ventilsitzes angeordnet und somit die Tasche nach oben hin offen und nach unten zum Einlass hin geschlossen ausgebildet.

Um zusätzlich einerseits eine ausreichende Höhe der Schmutztaschen und anderseits einen ausreichend großen Raum zur Aufnahme einer möglichst großen Partikelmenge in der Schmutztasche sicher zu stellen, erstrecken sich die Schmutztaschen über mindestens drei Viertel der gesamten axialen Länge des Regelkörpers.

Erfindungsgemäß sind mehrere Schmutztaschen über den Umfang verteilt am Regelkörper ausgebildet, wobei in einem Querschnitt in mittlerer axialer Höhe des Regelkörpers der Anteil der Schmutztaschen am Gesamtquerschnitt mindestens 10% beträgt. Somit wird ein großes Volumen zur Aufnahme der Partikel stetig bereit gestellt.

Vorzugsweise ist am Regelkörper an der zum Einlass weisenden Seite des Regelkörpers ein Partikelschutzschirm ausgebildet, wobei eine Projektionsfläche des Partikelschutzschirms in Axialrichtung auf den Regelkörper zum Partikelschutzschirm weisenden Enden der Durchgangsöffnungen im Regelkörper zumindest teilweise überdeckt. Durch diesen Partikelschutzschirm wird die in den Raum, der an der zum Einlass entgegengesetzten Seite des Regelkörpers im Gehäuse ausgebildet ist, einströmende Partikelmenge deutlich reduziert, da ein gerades Einströmen durch die Durchströmungsöffnungen weitestgehend verhindert wird. Entsprechend wird der Strömungswiderstand für die Partikel, um an die Rückseite des Regelkörpers zu gelangen deutlich erhöht. Entsprechend wird die Funktionsfähigkeit des Kühlmittelventils noch länger aufrechterhalten.

Insbesondere überdeckt dabei die Projektionsfläche des Partikelschutzschirms in Axialrichtung auf die zum Partikelschutzschirm weisenden Enden der Durchgangsöffnungen im Regelkörper zumindest 90% der Enden der Durchgangsöffnungen. Eine solche Überdeckung erzeugt eine beinahe zwangsweise Umlenkung, wenn ein Partikel vom Einlass zur Rückseite des Regelkörpers in den Raum strömen soll. Entsprechend wird eine deutliche Reduktion der in den Raum gelangenden Partikel erzielt.

In einer besonders bevorzugten Ausführung ist ein sich axial erstreckender ringförmiger Vorsprung des Regelkörpers auf den Ventilsitz aufsetzbar, der einen größeren Durchmesser aufweist als der Partikelschutzschirm, wobei eine fluidische Verbindung der Durchgangsöffnungen zum Einlass zwischen dem Partikelschutzschirm und dem ringförmigen Vorsprung gebildet ist. Entsprechend befinden sich die Durchgangsöffnungen im radial Inneren des Ventilsitzes. Zwischen dem ringförmigen Vorsprung und dem Partikelschutzschirm erfolgt das Einströmen vom Einlass zum Raum hinter dem Regelkörper stromabwärts des Partikelschutzschirms erfolgt im folgenden Abschnitt die Umlenkung zu den Durchgangsöffnungen, in denen eine gerade Durchströmung vorliegt. Ein Einströmen der Partikel aufgrund der reinen Hubbewegung des Schließkörpers wird somit ausgeschlossen, da der Querschnitt der rein axial durchströmbaren Fläche sehr klein ist. Somit wird die Menge an Partikeln reduziert, die in den Raum hinter dem Regelkörper strömen, da diese vom Kühlmittelstrom mitgeschleppt entlang der Umlenkungen werden müssen.

Vorzugsweise weist eine Bewegungseinheit, bestehend aus dem Anker und dem Regelkörper, im geschlossenen Zustand des Kühlmittelventils auf der dem Einlass zugewandten Seite die gleiche in Axialrichtung druckwirksame Fläche auf wie auf der dem Einlass abgewandten Seite der Bewegungseinheit. Entsprechend findet nicht nur ein Druckausgleich über die Bewegungseinheit statt, sondern auch ein Kraftausgleich, so dass auf die Bewegungseinheit nur die Kraft des Aktors wirkt.

Auch ist es vorteilhaft, wenn die Durchgangsöffnungen und die Schmutztaschen axial verlaufen, da auf diese Weise der zur Verfügung stehende Querschnitt für den Druckausgleich und für die Schmutztaschen optimal genutzt werden kann.

In einer besonders bevorzugten Ausführungsform ist an der vom Einlass abgewandten Seite des Regelkörpers im radial äußeren Bereich ein Lippendichtring befestigt, über den der Raum, der an der dem Einlass abgewandten Seite des Regelkörpers im Aktor ausgebildet ist, zum Auslass abgedichtet ist. Über diesen Lippendichtring wird eine Kurzschlussströmung beziehungsweise Leckageströmung vom Einlass zum Auslass über den Raum zuverlässig vermieden. Die Schenkel des Lippendichtringes wiesen dabei in Richtung des Raums und somit zur druckhöheren Seite. So wird eine hohe Dichtigkeit erreicht.

Es wird somit ein robustes Kühlmittelventil geschaffen, die einfach und kostengünstig zu fertigen ist und dabei unempfindlich gegenüber im Kühlmittel vorhandene Schmutzstoffe und Partikel ist. Entsprechend wird die Funktionsfähigkeit des Kühlmittelventils über einen langen Zeitraum zuverlässig aufrechterhalten, da die Partikel in Schmutztaschen im Regelkörper gesammelt werden können und somit nicht in den Gleitbereich zwischen zwei relativ zueinander beweglichen Teilen gelangen. Zusätzlich wird die Druckausgleichsfunktion und somit zuverlässige Schaltbarkeit des Kühlmittelventils auch bei Druckschwankungen aufrechterhalten, indem die Durchgangsöffnungen des Regelkörpers vor Verstopfung bewahrt werden.

Ein Ausführungsbeispiel eines erfindungsgemäßen Kühlmittelventils ist in den Figuren dargestellt und wird nachfolgend beschrieben.
Figur 1 zeigt eine Seitenansicht eines erfindungsgemäßen Kühlmittelventils in geschnittener Darstellung.

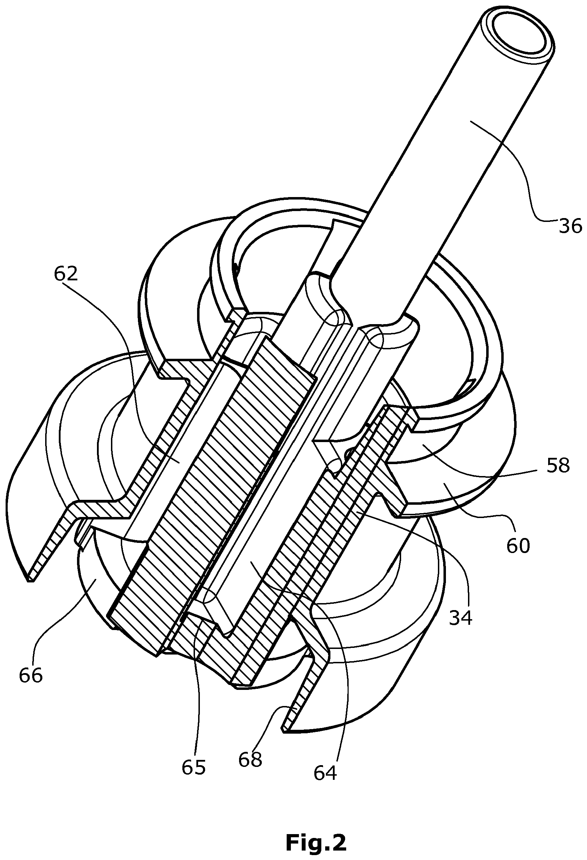

Figur 2 zeigt eine perspektivische Ansicht eines Regelkörpers des erfindungsgemäßen Kühlmittelventils aus Figur 1 in geschnittener Darstellung.

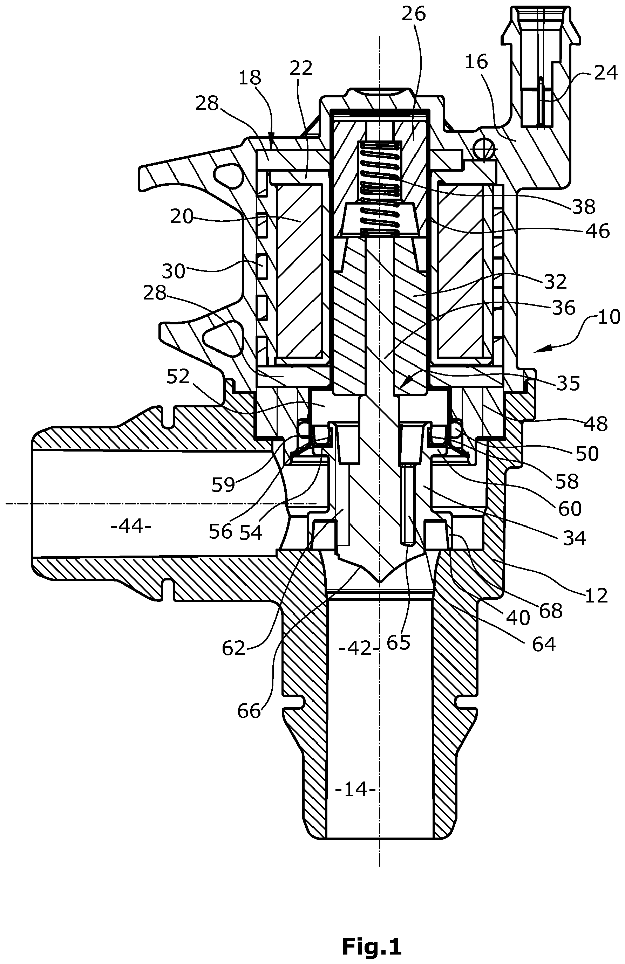

Das in Figur 1 dargestellte Kühlmittelventil besteht aus einem Gehäuse 10, welches zweiteilig ausgeführt ist und ein Strömungsgehäuse 12 mit einem darin ausgebildeten Strömungskanal 14 und ein am Strömungsgehäuse 12 befestigtes Aktorgehäuse 16 aufweist, in dem ein elektromagnetischer Aktor 18 angeordnet ist.

Der elektromagnetische Aktor 18 weist einen elektromagnetischen Kreis auf, der aus einer Spule 20, die auf einen Spulenträger 22 gewickelt ist und über einen Stecker 24 bestrombar ist, sowie einem magnetisierbaren Kern 26, Rückschusselementen 28, einem Joch 30 und einem beweglichen Anker 32 besteht. Bei Bestromung der Spule 20 wird der Anker 32 in bekannter Weise durch die entstehenden magnetischen Kräfte in Richtung des Kerns 26 bewegt.

Der Anker 32 bildet mit einem Regelkörper 34 eine Bewegungseinheit 35, indem der Anker 32 mit dem Regelkörper 34 über ein Koppelglied 36 verbunden wird, welches einteilig mit dem Regelkörper 34 ausgebildet ist und sich in eine Bohrung des Ankers 32 erstreckt und in der Bohrung am Anker 32 befestigt ist. Über eine Feder 38 wird die Bewegungseinheit 35 in einer vom Kern 26 weg weisenden Richtung belastet, wodurch der Regelkörper 34 auf einen Ventilsitz 40 gedrückt wird, der im Strömungsgehäuse 12 zwischen einem axialen Einlass 42 und einem radialen Auslass 44 ausgebildet ist, so dass ein Durchströmungsquerschnitt des Strömungskanals 14 verschlossen wird. Bei Bestromung der Spule 20 übersteigt die magnetische Kraft die Kraft der Feder 38, wodurch der Regelkörper 34 vom Ventilsitz 40 abgehoben wird und somit den Durchströmungsquerschnitt freigibt.

Der Anker 32 ist in einer Hülse 46 geführt, in der auch der Kern 26 befestigt ist und die sich radial im Innern des Aktors 18 bis in einen Gehäusevorsprung 48 des Aktorgehäuses 16 erstreckt, der sich axial in das Strömungsgehäuse 12 erstreckt. Zwischen diesem Gehäusevorsprung 48 und einem Endbereich der Hülse 46 ist ein O-Ring 50 angeordnet, über den der radial äußere Bereich der Hülse 46 gegenüber dem geförderten Kühlmittel abgedichtet wird, so dass kein Kühlmittel zur Spule 20 gelangen kann.

Des Weiteren begrenzt die Hülse 46 einen Raum 52, der an einer vom Einlass 42 abgewandten Seite des Regelkörpers 34 beziehungsweise der Bewegungseinheit 35 gebildet wird und der gegenüber dem Auslass 44 mittels eines Lippendichtringes 54, dessen geschlossene Seite zum Auslass 44 weist, abgedichtet wird. Der Lippendichtring 54 wird mit dem Regelkörper 34 bewegt und ist über seinen inneren Schenkel 56 in einer Radialnut 58 des Regelkörpers 34 befestigt und liegt mit seinem äußeren Schenkel 59 gegen die Hülse 46 an. Axial liegt der Lippendichtring 54 mit seiner geschlossenen Seite auf einer Auflagefläche 60 des Regelkörpers 34 auf, die als umlaufender radialer Vorsprung am Regelkörper 34 ausgebildet ist.

Der Raum 52 ist über im Regelkörper 34 ausgebildete Durchgangsöffnungen 62, die als axiale Durchgangsbohrungen ausgeführt sind, kontinuierlich mit dem Einlass 42 verbunden, wodurch die Bewegungseinheit 35 druckausgeglichen ist. Da zusätzlich die Fläche an der vom Einlass 42 entfernten Seite, auf die der Druck wirkt, auch der Fläche des Regelkörpers 34 radial innerhalb des Ventilsitzes 40 entspricht, besteht auch ein Kräftegleichgewicht bezüglich der hydraulischen Kräfte. Entsprechend ist der Regelkörper 34 ausschließlich in Abhängigkeit der Federkraft und der elektromagnetischen Kraft bewegbar.

Um dieses Kräftegleichgewicht aufrechtzuerhalten und auch Verschmutzungen zwischen der Hülse 46 und dem Anker 32 oder dem Regelkörper 34 zu verhindern, weist der Regelkörper 34 zusätzlich Schmutztaschen 64 auf.

Diese Schmutztaschen 64 erstrecken sich vom Raum 52 in Richtung des Einlasses 42 im Regelkörper 34 und weisen räumlich an den axial zum Einlass 42 weisenden Enden Böden 65 auf, durch die sie geschlossen sind, wobei über die Durchgangsöffnungen 62 und den Raum 52 eine fluidische Verbindung der Schmutztaschen 64 zum Einlass 42 besteht.

Im vorliegenden Ausführungsbeispiel sind am Regelkörper 34 gleichmäßig über den Umfang verteilt und in abwechselnder Folge drei Durchgangsöffnungen 62 und drei Schmutztaschen 64 ausgebildet, die sich jeweils axial im Regelkörper 34 und radial innerhalb des Ventilsitzes 40 erstrecken.

Die Verbindung des Einlasses 42 mit dem Raum 52 erfolgt jedoch nicht vollständig axial über die Durchgangsöffnungen 62, da die Enden der Durchgangsöffnungen 62 größtenteils durch einen Partikelschutzschirm 66 verdeckt sind, der zentral am zum Einlass 42 weisenden Ende des Regelkörpers 34 ausgebildet ist. Die Einströmung in die Durchgangsöffnungen 62 erfolgt entsprechend zunächst zwischen dem Partikelschutzschirm 66 und einem sich axial erstreckenden ringförmigen Vorsprung 68, mit dem der Regelkörper 34 auf den Ventilsitz 40 aufsetzbar ist. Von hier aus erfolgt zunächst eine Umlenkung der Strömung nach radial innen in die Durchgangsöffnungen 62 und von hier aus axial in den Raum 52.

Ist nun der Kühlmittelstrom mit Partikeln verunreinigt, werden diese zunächst daran gehindert gerade axial in den Raum 52 zu strömen. Die dennoch in den Raum 52 gelangenden Partikel sinken aufgrund der Erdanziehung aus dem Raum 52 in die Schmutztaschen 64, in denen die Partikel gesammelt werden. Entsprechend ist das Kühlmittelventil so anzuordnen, dass der Einlass zur Erdoberfläche weist und der Aktor 18 von ihr weg. Geodätisch sind entsprechend die Böden 65 der tiefste Punkt der Schmutztaschen 64. Die axiale Ausdehnung dieser Schmutztaschen 64 wird hierzu auch größer gestaltet als der Maximalhub des Regelkörpers 34, wodurch bei Bewegung die am Boden 65 der Schmutztaschen 64 abgesetzten Partikel in den Schmutztaschen 64 verbleiben. Auf diese Weise wird sowohl zuverlässig ein Verstopfen der Durchgangsöffnungen 62 verhindert als auch ein Absetzen der Partikel zwischen der Hülse 46 und der Bewegungseinheit 35, was zu einer Schwergängigkeit des Ventils führen würde.

Die erfindungsgemäße Ventilvorrichtung ist kostengünstig in der Herstellung und robust im Betrieb. Sie erhält die Druckausgleichsfunktion des Regelkörpers aufrecht, indem einerseits das Eindringen von Verunreinigungen in den Regelkörper deutlich reduziert wird als auch den Verunreinigungen Platz zum Absetzen zur Verfügung gestellt wird, wodurch funktionsrelevante Teile nicht weiter durch die Verunreinigungen belastet werden. Entsprechend wird die Lebensdauer des Kühlmittelventils erhöht.

Es sollte deutlich sein, dass der Schutzbereich des vorliegenden Hauptanspruchs nicht auf das beschriebene Ausführungsbeispiel beschränkt ist. Beispielsweise kann die Kopplung zwischen dem Anker und dem Regelkörper anders ausgeführt sein oder der Regelkörper mehrteilig ausgeführt werden. Auch können mehr oder weniger Durchgangsöffnungen und Schmutztaschen vorgesehen werden. Selbstverständlich ist es auch möglich, das Ventil als stromlos offenes Ventil auszuführen, bei dem der Kern zwischen dem Anker und dem Regelkörper angeordnet ist.

## Patentansprüche

1. Kühlmittelventil für ein Kraftfahrzeug mit
einem Gehäuse (10), das einen Einlass (42) und einen Auslass (44) aufweist,
einem Durchströmungsquerschnitt, der zwischen dem Einlass (42) und dem Auslass (44) ausgebildet ist und von einem Ventilsitz (40) umgeben ist,
einem Regelkörper (34), der auf den Ventilsitz (40) absetzbar und vom Ventilsitz (40) abhebbar ist,
Durchgangsöffnungen (62) im Regelkörper (34), über die der Einlass (42) stetig mit einem Raum (52) an der dem Einlass (42) abgewandten Seite des Regelkörpers (34) verbunden ist,
einem elektromagnetischen Aktor (18) mit einem Anker (32), der mit dem Regelkörper (34) gekoppelt und bewegbar ist,
wobei
im Regelkörper (34) zumindest eine Schmutztasche (64) ausgebildet ist, die einen zum Einlass (42) weisenden geschlossenen Boden (65) aufweist und zu dem Raum (52), der an der dem Einlass (42) abgewandten Seite des Regelkörpers (34) ausgebildet ist, offen ist,
wobei mehrere Schmutztaschen (64) über den Umfang verteilt am Regelkörper (34) ausgebildet sind, wobei in einem Querschnitt in mittlerer axialer Höhe des Regelkörpers (34) der Anteil der Schmutztaschen (64) am Gesamtquerschnitt mindestens 10% beträgt.

2. Kühlmittelventil für ein Kraftfahrzeug nach Anspruch 1,
**dadurch gekennzeichnet, dass**
sich die Schmutztasche (64) axial im Regelkörper (34) erstreckt und eine axiale Länge aufweist, die größer ist als der maximale Hub des Ankers (32).

3. Kühlmittelventil für ein Kraftfahrzeug nach Anspruch 1 oder 2,
**dadurch gekennzeichnet, dass**
sich die Schmutztaschen (64) über mindestens drei Viertel der gesamten axialen Länge des Regelkörpers (34) erstrecken.

4. Kühlmittelventil für ein Kraftfahrzeug nach einem der vorangegangenen Ansprüche,
**dadurch gekennzeichnet, dass**
am Regelkörper (34) an der zum Einlass (42) weisenden Seite des Regelkörpers (34) ein Partikelschutzschirm (66) ausgebildet ist, wobei eine Projektionsfläche des Partikelschutzschirms (66) in Axialrichtung auf den Regelkörper (34) zum Partikelschutzschirm (66) weisende Enden der Durchgangsöffnungen (62) im Regelkörper (34) zumindest teilweise überdeckt.

5. Kühlmittelventil für ein Kraftfahrzeug nach Anspruch 4,
**dadurch gekennzeichnet, dass**
die Projektionsfläche des Partikelschutzschirms (66) in Axialrichtung auf die zum Partikelschutzschirm (66) weisenden Enden der Durchgangsöffnungen (62) im Regelkörper (34) zumindest 90% der Enden der Durchgangsöffnungen (62) überdeckt.

6. Kühlmittelventil für ein Kraftfahrzeug nach Anspruch 4 oder 5,
**dadurch gekennzeichnet, dass**
ein sich axial erstreckender ringförmiger Vorsprung (68) des Regelkörpers (34) auf den Ventilsitz aufsetzbar ist, der einen größeren Durchmesser aufweist als der Partikelschutzschirm (66), wobei eine fluidische Verbindung der Durchgangsöffnungen (62) zum Einlass (42) radial zwischen dem Partikelschutzschirm (66) und dem ringförmigen Vorsprung (68) gebildet ist.

7. Kühlmittelventil für ein Kraftfahrzeug nach einem der vorangegangenen Ansprüche,
**dadurch gekennzeichnet, dass**
eine Bewegungseinheit (35), bestehend aus dem Anker (32) und dem Regelkörper (34), im geschlossenen Zustand des Kühlmittelventils auf der dem Einlass (42) zugewandten Seite die gleiche in Axialrichtung druckwirksame Fläche aufweist wie auf der dem Einlass (42) abgewandten Seite der Bewegungseinheit (35).

8. Kühlmittelventil für ein Kraftfahrzeug nach einem der vorangegangenen Ansprüche,
**dadurch gekennzeichnet, dass**
die Durchgangsöffnungen (62) und die Schmutztaschen (64) axial verlaufen.

9. Kühlmittelventil für ein Kraftfahrzeug nach einem der vorangegangenen Ansprüche,
**dadurch gekennzeichnet, dass**
an der vom Einlass (42) abgewandten Seite des Regelkörpers (34) im radial äußeren Bereich ein Lippendichtring (54) befestigt ist, über den der Raum (52), der an der dem Einlass (42) abgewandten Seite des Regelkörpers (34) im Aktor (18) ausgebildet ist, zum Auslass (44) abgedichtet ist.

## Claims

1. Coolant valve for a motor vehicle with
a housing (10) comprising an inlet (42) and an outlet (44)
a flow cross-section which is configured between the inlet (42) and the outlet (44) and is surrounded by a valve seat (40)
a control body (34) which can be lowered onto the valve seat (40) and lifted off the valve seat (40),
through openings (62) in the control body (34), via which the inlet (42) is continuously connected to a space (52) on the side of the control body (34) facing away from the inlet (42),
an electromagnetic actuator (18) with an armature (32), which is coupled to and is movable with the control body (34) ,
wherein
at least one dirt pocket (64) is configured at the control body (34), which dirt pocket comprises a closed bottom (65) facing the inlet (42) and is open to the space (52) configured on the side of the control body (34) facing away from the inlet (42),
wherein several dirt pockets (64) are configured at the control body (34) distributed over the circumference, wherein in a cross-section at the middle axial height of the control body (34) the proportion of the dirt pockets (64) to the total cross-section is at least 10%.

2. Coolant valve for a motor vehicle according to claim 1,
**characterised in that**
the dirt pocket (64) extends axially in the control body (34) and comprises an axial length which is greater than the maximum stroke of the armature (32).

3. Coolant valve for a motor vehicle according to claim 1 or 2,
**characterised in that**
the dirt pockets (64) extend over at least three quarters of the entire axial length of the control body (34).

4. Coolant valve for a motor vehicle according to one of the preceding claims,
**characterised in that**
a particle protection screen (66) is configured on the control body (34) on the side of the control body (34) facing the inlet (42), wherein a projection surface of the particle protection screen (66) at least partially covers ends of the through openings (62) in the control body (34) facing the particle protection screen (66) in the axial direction on the control body (34).

5. Coolant valve for a motor vehicle according to claim 4,
**characterised in that**
the projection surface of the particle protection screen (66) in the axial direction onto the ends of the through openings (62) in the control body (34) pointing towards the particle protection screen (66) covers at least 90% of the ends of the through openings (62).

6. Coolant valve for a motor vehicle according to claim 4 or 5,
**characterised in that**
an axially extending annular projection (68) of the control body (34) can be placed on the valve seat, which projection comprises a larger diameter than the particle protection screen (66), wherein a fluidic connection of the through openings (62) to the inlet (42) is defined radially between the particle protection screen (66) and the annular projection (68).

7. Coolant valve for a motor vehicle according to one of the preceding claims,
**characterised in that**
a movement unit (35), comprising the armature (32) and the control body (34), comprises, in the closed state of the coolant valve, on the side facing the inlet (42), the same surface effective for pressure in the axial direction as on the side of the movement unit (35) facing away from the inlet (42).

8. Coolant valve for a motor vehicle according to one of the preceding claims,
**characterised in that**
the through openings (62) and the dirt pockets (64) extend axially.

9. Coolant valve for a motor vehicle according to one of the preceding claims,
**characterised in that**
a lip seal ring (54) is attached to the side of the control body (34) facing away from the inlet (42) in the radially outer region, via which lip seal ring the space (52), which is configured in the actuator (18) on the side of the control body (34) facing away from the inlet (42), is sealed with respect to the outlet (44).

## Revendications

1. Valve de refroidissement pour véhicule automobile avec
un boîtier (10) qui comprend une entrée (42) et une sortie (44),
une section d'écoulement formée entre l'entrée (42) et la sortie (44) et entourée par un siège de vanne (40),
un corps de régulation (34) qui peut être déposé sur le siège de vanne (40) et soulevé du siège de vanne (40),
des ouvertures de passage (62) dans le corps de régulation (34), par lesquelles l'entrée (42) est reliée en permanence avec un espace (52) sur le côté du corps de régulation (34) opposé à l'entrée (42),
un actionneur électromagnétique (18) avec une armature (32) qui est couplée et mobile avec le corps de régulation (34),
dans lequel
au moins une poche de saleté (64) est formée dans le corps de régulation (34), laquelle comprend un fond fermé (65) orienté vers l'entrée (42) et est ouverte vers l'espace (52) qui est formé sur le côté du corps de régulation (34) opposé à l'entrée (42),
plusieurs poches de saleté (64) étant formées sur le corps de régulation (34) et réparties sur la périphérie, la proportion des poches de saleté (64) par rapport à la section totale étant d'au moins 10% sur une section transversale située à la hauteur axiale moyenne du corps de régulation (34).

2. Valve de refroidissement pour un véhicule automobile selon la revendication 1,
**caractérisé en ce que**
la poche de saleté (64) s'étend axialement dans le corps de régulation (34) et comprend une longueur axiale supérieure à la course maximale de l'armature (32).

3. Valve de refroidissement pour un véhicule automobile selon la revendication 1 ou 2,
**caractérisé en ce que**
les poches de saleté (64) s'étendent sur au moins les trois quarts de la longueur axiale totale du corps de régulation (34).

4. Valve de refroidissement pour véhicule automobile selon l'une quelconque des revendications précédentes,
**caractérisé en ce que**
un écran de protection contre les particules (66) est formé sur le corps de régulation (34) sur le côté du corps de régulation (34) orienté vers l'entrée (42), une surface de projection de l'écran de protection contre les particules (66) recouvrant au moins partiellement les extrémités des ouvertures de passage (62) dans le corps de régulation (34) orientées vers l'écran de protection contre les particules (66) dans la direction axiale sur le corps de régulation (34).

5. Valve de refroidissement pour un véhicule automobile selon la revendication 4,
**caractérisé en ce que**
la surface de projection de l'écran de protection contre les particules (66) dans la direction axiale sur les extrémités des ouvertures de passage (62) dans le corps de régulation (34) orientées vers l'écran de protection contre les particules (66) recouvre au moins 90% des extrémités des ouvertures de passage (62).

6. Valve de refroidissement pour un véhicule automobile selon la revendication 4 ou 5,
**caractérisé en ce que**
une projection annulaire (68) du corps de régulation (34) s'étendant axialement peut être montée sur le siège de vanne et comprend un diamètre supérieur à celui de l'écran de protection contre les particules (66), une connexion fluidique des ouvertures de passage (62) vers l'entrée (42) étant formée radialement entre l'écran de protection contre les particules (66) et la projection annulaire (68).

7. Valve de refroidissement pour un véhicule automobile selon l'une quelconque des revendications précédentes,
**caractérisé en ce que**
une unité de déplacement (35), composée de l'armature (32) et du corps de régulation (34), comprend, à l'état fermé de la valve de refroidissement, sur le côté tourné vers l'entrée (42), la même surface agissant sur la pression dans la direction axiale que sur le côté de l'unité de déplacement (35) opposé à l'entrée (42).

8. Valve de refroidissement pour un véhicule automobile selon l'une quelconque des revendications précédentes,
**caractérisé en ce que**
les orifices de passage (62) et les poches de saleté (64) s'étendent axialement.

9. Valve de refroidissement pour véhicule automobile selon l'une quelconque des revendications précédentes,
**caractérisé en ce que**
sur le côté du corps de régulation (34) opposé à l'entrée (42), dans la zone radialement extérieure, est fixée une bague d'étanchéité à lèvres (54) par l'intermédiaire de laquelle l'espace (52), qui est formé dans l'actionneur (18) sur le côté du corps de régulation (34) opposé à l'entrée (42), est étanchéifié par rapport à la sortie (44).
